# EUROPEAN PATENT SPECIFICATION

(11) **EP 0 345 908 B1**
(45) Date of publication and mention of the grant of the patent: **17.11.1994**
(21) Application number: 89201479.6
(22) Date of filing: 08.06.1989
(51) Int. Cl.: H01M 8/06

(54) **A process for converting fuel into electricity**
Verfahren zur Umwandlung von Brennstoff in Elektrizität
Un procédé pour convertir du combustible en électricité

(30) Priority: 10.06.1988 NL 8801492
(43) Date of publication of application: 13.12.1989
(73) Proprietor: KTI GROUP B.V., NL-2715 CA Zoetermeer (NL)
(72) Inventor: Mugerwa, Michael Nkambo, NL-2725 PK Zoetermeer (NL); Blomen, Leo Jozef Maria Joannes, NL-2253 VP Voorschoten (NL)
(74) Representative: Smulders, Theodorus A.H.J., Ir.

(56) References cited:
- EP-A- 0 071 967
- DE-A- 1 592 278
- DE-A- 3 532 835
- FR-A- 2 375 729
- GB-A- 2 182 195
- US-A- 4 200 682
- PATENT ABSTRACTS OF JAPAN, vol. 12, no. 162 (E-609)[3009], 17th May 1988;
- REPORT JANUARY 1977, EPRI EM-384, Exxon Enterprises, pages 1-1-A6-24, New York, US; E.R. ELZINGA et al.: "Applications of the alsthom/exxon alkaline fuel cell system to utility power generation"
- PATENT ABSTRACTS OF JAPAN, vol. 12, no. 168 (E-611)[3015], 20th May 1988;
- PATENT ABSTRACTS OF JAPAN, vol. 12, no. 65 (E-586)[2912], 27th February 1988;
- PATENT ABSTRACTS OF JAPAN, vol. 12, no. 168 (E-611)[3015], 20th May 1988;
- RIVISTA DEI COMBUSTIBILI, vol. 32, nos. 7-8, July-August 1978, pages 233-250; G. SALVI et al.: "Generatore automatico di idrogeno da metanolo: problemi di depurazione del gas prodotto e scelte costruttive"
- PATENT ABSTRACT OF JAPAN, vol. 12, no. 162 (E-609)[3009], 17th May 1988; & JP-A-62 274 561 (MITSUBISHI HEAVY IND. LTD) 28-11-1987

## Description

This invention relates to a process for converting a fuel on the basis of hydrocarbon into electricity.

For generating electricity from fossile fuels, traditionally power stations have been used, in general, in which fossile fuel, such as coal, oil, or natural gas, is combusted to drive either gas turbines or, after conversion of the heat into steam, steam turbines, which, in turn, drive electricity generators. One important disadvantage of these traditional systems resides in the relatively low electrical efficiency of these systems.

It has already been proposed to use fuel cell systems for the generation of electricity from fossile fuels. (gB-A 2,182,195) The use of fuel cells in combination with a H₂ producing unit has a number of clear advantages.

In the first place, the efficiency of fuel cell systems is high, especially when the various parts are suitably integrated. In such a case, the efficiency of the total plant may even be higher than the efficiency of the fuel cell stack. In the second place, there is obtained an electricity production system with a low emission of possibly harmful substances. In the third place, such systems have good "partial-load characteristics", which means that even at lower loads a good efficiency is obtained. In the fourth place, a modular construction of such systems is possible.

Power plants based on fuel cells generally comprise, depending on the type of fuel, a pre-treatment of the fuel (desulfurization, pre-heating), a conversion thereof into a gas containing H₂ (for example by steam-reforming and/or water-shift reaction), cooling the gas to remove condensable impurities, and bringing the temperature of the gas to the operating temperature of a fuel cell unit. The resulting H₂ containing gas and an O₂ containing gas are then supplied to the fuel cell unit in which the electrochemical reaction 2 H₂ + O₂ → 2 H₂O + ΔE + ΔH takes place. The electrical energy is removed and generally converted from direct current into alternating current, while the heat produced is also removed and possibly used to supplement the plant's power requirements. The H₂ containing gases from the anode compartments of the fuel cells are used as a fuel gas in the H₂ production section.

The type of fuel cell that can be used in such a system is generally based on the use of phosphoric acid as the electrolyte.

One of the factors which have limited the application of fuel cells in the generation of electricity on a large scale is the fact that the service life of the fuel cells is limited. In fact, in the course of time, the fuel cells are going to give an ever lower efficiency, which is expressed, for example, in a lower voltage. When this voltage has decreased to about 90 to 95% of the original value, the fuel cell stack should be replaced.

In electricity producing plants on the basis of fuel cells, the situation occurs that, to produce an optimum efficiency, the integration is extremely high. This means, however, that if there is trouble in one or more parts, or when the electricity demand is interrupted, often the entire plant must be stopped.

It is one object of the invention to provide a process for converting fuel into electricity, in which the efficiency decreases less strongly in the course of time, so that the service life of the total stack becomes longer.

It is another object of the invention to decrease the sensitivity to trouble or interruptions in power take-off of the total plant. In fact it has been found that the known electricity producing plants based on fuel cells have poor reliability. Both owing to contaminations in the supply gases to the fuel cell and owing to the extensive integration needed to reach a high efficiency, these plants permit only short times of operation without breakdown.

The process according to the invention, comprising the conversion of a fuel on the basis of hydrocarbon into electricity, by comprising the following stages:
a) catalytically converting said fuel into an H₂ containing gas,
b) passing said H₂ containing gas through at least one "pressure-swing" adsorption unit to produce an H₂ gas stream of high purity, as well as a desorption gas, and
c) supplying said H₂ gas stream of high purity to the anode compartments of at least one fuel cell stack operating at a temperature of at least 140°C, said fuel cell stack consisting of fuel cells based upon phosphoric acid, in which electricity is generated.

The process according to the invention is based on fuels such as natural gas, LPG, naphtha, fuel oil, petrol, diesel oil, biogas, gas from household refuse, lower alcohols, such as methanol, and/or gas from the gasification of coal, wood and refuse. The use of natural gas is preferred. Depending on the nature of the fuel, it may be desirable for the fuel to be subjected to a pre-treatment to prevent, on the one hand, that the catalyst is poisoned or damaged in the second step, and on the other hand, to provide optimum process conditions.

Examples of such pre-treatments are desulfurization, heat exchange with other process streams, filtration (to remove dust particles), etc.

Surprisingly it has been found that the use of the pressure-swing adsorption technique for the H₂ containing gas stream results in considerable advantages as regards the total operation of the process according to the invention.

An important advantage of the invention resides in the fact that the reliability of the overall system has been considerably enhanced. By virtue of both the high purity of the feed to the anode and the reduced integration of the various parts of the plant the reliability proves to be considerably improved. In fact, up until now it has been virtually impossible for such systems to be kept in operation for a reasonable period of time without trouble.

When fuel cells are used, those skilled in the art would expect, on the ground of data regarding the operation of pressure-swing adsorption, that the efficiency of the process would be markedly reduced, but it turns out that, owing to the integration of the adsorption process in the invention, unexpected advantages occur. In fact, more specifically, the fuel cell's service life proves to be considerably prolonged, so that, where it was generally considered necessary for it to be replaced after about 40,000 hours' operation, this is now unnecessary.

The skilled worker, aware of the fact that phosphoric acid fuel cells are fairly insensitive to contaminations, was of the opinion, that the use of H₂ of high purity would only have disadvantages.

In particular it was expected that the additional purification of H₂ would greatly detract from the overall efficiency of the plant. Surprisingly it has been found that when a pressure-swing adsorption unit is used for the purification of H₂ the same, or virtually the same efficiency can be achieved, while at the same time some additional advantages are obtained, such as a longer service life of the fuel cells, a clearly reduced sensitivity to trouble, and a much simpler control of the process owing to the low degree of integration.

The process according to the invention has the additional advantage that the fuel cell is in fact isolated from the H₂ production unit. This means, among other things, that disturbances in, and contaminations from, the H₂ production unit are not directly passed to the fuel cell unit. Moreover, the pressure-swing adsorption unit can function as a kind of buffer between the H₂ production unit and the fuel cell stack, so that fluctuations in electricity demands can be taken up. In a preferred embodiment of the invention, additional buffer capacity can be provided by placing a H₂ buffer vessel between the PSA and the fuel cell. In this way it is possible, among other things, to deal with strong fluctuations in power demand without any problems, and without the need of adjusting the H₂ producing unit. It is then possible for the H₂ producing unit to be operated under optimum conditions and to deal with variations in demand by means of the buffer capacity. In addition, the buffer capacity compensates for the differences in "reaction rate" between the units referred to.

The use of additional buffer capacity is beneficial during the starting-up of the total unit. Owing to the use of fuel cells operating at a high temperature, there is the possibility of first starting up the fuel cells, which subsequently produce process steam which is used for starting-up the H₂ producing unit.

Another advantage of the process according to the invention is that it is no longer necessary for the H₂ containing exhaust gases from the anode compartments of the fuel cells to be used as a fuel to provide the heat for the H₂ production unit. In fact, in view of the composition of these gases it is possible for the greater part of the H₂ to be used in the fuel cells, so that only a very limited amount of gas needs to be discharged. This quantity is determined by the extent of contamination in the H₂ gas. Complete recycling to the inlet of the anode compartments would lead to an accumulation of impurities, which of course is undesirable and can be harmful. The spent gas can now, for example, be returned to another part of the plant.

There is, however, a gas stream available, which contains H₂, namely, the desorption gas from the pressure-swing adsorption unit, so that, in accordance with a preferred embodiment according to the invention, it is possible for this gas stream to be used as a fuel gas in the steam reformer. This has the extremely great advantage that the upstream section of the overall plant, the H₂ production unit and the pressure-swing adsorption unit, can be operated independently of the fuel cell stack. If, for some reason, the fuel cell stack must be taken off-stream, for example, owing to trouble occurring therein, or owing to a reduced electricity demand, it is not necessary to stop the entire upstream section. For example, the H₂ production unit can be adjusted to low load, and the unit can be kept in operation at any rate for some time through recycling the desorption gas. In such plants, and in particular when these are of large size, it is in fact extremely time-consuming and power-intensive for these plants to be stopped and re-started. The possibility of permitting the plant to operate for some time without any current being taken off is therefore extremely favourable.

As stated before, the process according to the invention comprises in essence three different stages. The first stage comprises the conversion of the fuel to be used, for example, a fossile fuel, into a hydrogen-containing gas. This conversion takes place in principle using a catalyst, and consists, for example, of a two-stage process, with catalytic reforming in the presence of steam taking place in the first stage.

Depending on the type of fuel, the temperature may range of 150°C to 1200°C. Lighter fuels, such as methanol, require lower temperatures than very heavy fuels, such as fuel oil. A fuel such as naphtha, is between these two. Typical temperatures for the steam reforming of naphtha range between 600 and 1000°C. The pressure may range between about atmospheric pressure and about 50 bar.

The fuel is then converted into a gas containing H₂ and CO, possibly together with a large number of other components. Depending on the nature of the fuel used and the sensitivity of the catalyst, the fuel may, if desired, have been subjected to a pre-treatment. In the literature, it is widely documented how such a process can be performed.

The gas containing H₂ and CO is subsequently, in the second stage supplied to a so-called water-shift reaction stage, in which the CO present is converted, at least in part, and while water is supplied, to H₂ and CO₂. This reaction, too, is widely documented in the literature.

The exact performance and conditions of the reaction depend upon the nature of the fuel. For example, when methanol is used, it is possible to do without the water-shift reaction, while in the case of coal gas, which may contain much H₂ and CO as it is, steam reforming need not be used.

The conditions to be used in the two reaction stages described above correspond substantially with the conditions known from the literature for the production of a H₂-containing gas, for example, for the methanol or ammonia synthesis.

As the H₂-containing gas from the H₂ production unit has a high temperature, it is necessary for the gas to be cooled to the temperature desired for the next stage. This can be effected, at least in part, in heat exchange relationship with other streams in the process, so that the heat present can be used to optimum advantage. During cooling, an amount of water is condensed, as well as any other condensable compounds that may be present. After the separation of the condensed products, the H₂-containing gas can be supplied to stage b) of the process.

Depending on the pressure levels selected in the various process stages, it may be necessary for the gas supplied to the second stage to be increased in pressure.

This second stage of the process according to the invention, stage b), comprises the purification of the H₂ containing gas by means of so-called pressure-swing adsorption. By itself, this technique is well known, but it has never been used in a process of the subject type. In the pressure-swing adsorption method, the H₂ containing gas stream is supplied to at least one adsorption unit which contains an adsorbent, e.g., based on aluminum oxide, silica, zeolite, activated carbon and/or substances having a comparable activity, at a high pressure level, for example 5-50 bar. At this pressure level, a preferential adsorption occurs of all components in the gas stream, except H₂. As a result there is obtained a gas stream which consists essentially of H₂ and is extremely pure. Depending on the number of adsorption units, the ratio of quantity of adsorbent to gas volume per time unit, pressure, temperature and the like, it is possible to produce a gas stream containing at least 90% by volume of H₂, or even one containing less than 1 ppm of impurities. Preferably, a H₂ content of at least 98% by volume is aimed at, more specifically at least 99.9% by volume, while a H₂ content of at least 99.99% by volume is most preferred. The temperature at which the adsorption is carried out ranges from 0 to 100°C, depending on the pressure and the nature of the adsorbent.

The exact value for the quantity of impurities tolerated in the H₂ depends upon the economy of the process and on the type of fuel cell.

As soon as the adsorption unit or units have adsorbed so much matter that the purity of the H₂ is deteriorating, at least a portion of the adsorption unit is taken off-stream, and desorbed at a reduced pressure level. A suitable pressure level ranges between 0.1 and 5 bar. If desired, the temperature can be increased during the desorption, as adsorption takes place preferentially at low temperatures, whereas desorption takes place preferentially at high temperatures.

The desorption results in a desorption gas, which, by itself, is still rather rich in H₂. The total yield of H₂ gas of high purity is, in a conventional pressure-swing adsorption unit, 60-95%, so that still rather a large amount of H₂ and other combustible components is present in the desorption gas. In a preferred embodiment of the process according to the invention, this desorption gas is returned to the H₂ production unit, where it is used as a fuel gas. Although it is preferred for the process to be so conducted that the amount of desorption gas is just sufficient or too much to provide the necessary heat for the H₂ production, it may be desirable for the flexibility of the process that a portion of the heat required for steam reforming is supplied by supplementary fuel.

As stated above, if desired, the pure H₂ gas from the PSA unit can be supplied to a buffer vessel for temporary storage.

The third stage of the process according to the invention is formed by the fuel cell stack, consisting of an assembly of fuel cells.

A fuel cell unit is used which is based upon phosphoric acid cells.

These fuel cells operate at a temperature of at least 140°C, preferably at least 175°C. The upper limit of the temperature range depends upon the type of cell and may be at 1100°C. Preferably, the fuel cell is operated at a temperature of 175-220°C.

It is noted that the temperatures indicated relate to the operating temperature under normal conditions, that is to say, that these temperatures do not relate to start-up and shut-down conditions, in which the temperature may be lower than the values indicated.

In the performance of the process according to the invention, the highly pure H₂ gas stream is supplied to the anode compartments of the fuel cells. At the same time an amount of O₂ is supplied to the cathode compartments of these fuel cells. Depending on the type of fuel cell, use can be made of air, oxygen-enriched air, or even pure O₂.

It is especially when air is used as the O₂ source that it is desirable that this is filtered before being supplied to the cathode compartments of the fuel cell to remove any dust particles.

In the fuel cell, the electrochemical conversion of H₂ and O₂ to H₂O takes place with the formation of heat and electric power. As the fuel cell operates in principle isothermically, it is necessary for the excess of heat to be removed. Depending on the temperature level at which the fuel cell is operated, this heat can be directly removed to the air through coolers, or with cooling water. When the temperature level of the fuel cell is higher than 125°C, however, it is preferred for the heat to be removed in such a manner that steam can be formed with it. This steam is then, possibly after overheating, preferably used in the H₂ production unit of the process according to the invention. In the case of a low heat level, heat can possibly be used for (pre)heating streams.

As the H₂ gas stream passed to the fuel cell is extremely pure, it is sufficient to supply a slight excess only, relative to the quantity needed in the fuel cells (for example, a H₂ consumption of 95%). The non-converted H₂ containing gas stream can then be partially recycled over the cell and partially discharged. It is also possible, and preferred, for the total gas stream to be discharged. The H₂ containing gas stream which is not recycled over the fuel cell is preferably returned to the process, for example as a fuel gas to the H₂ production unit, but it is also possible for the gas stream to be returned to the inlet to stage a) or stage b). Finally, the gas stream can be discharged or combusted.

The gas stream from the cathode compartment of the fuel cells can be discharged or, with advantage, can be used as an O₂ source for combustion gas in the H₂ production unit, provided the oxygen content is high enough. In this way, the total energy present in the various process streams is used to optimum advantage.

As the conventional types of fuel cells generate electricity in the form of direct current, whereas many electricity mains are designed for alternating current, it may be desirable for an electricity conditioner to be coupled to the fuel cell. Such a conditioner not only has the task of converting the direct current into alternating current, but may additionally have a function in protecting the fuel cell from current surges and short-circuiting. The conditioner may, for example, additionally comprise a battery buffer system, the object of which is to ensure that the fuel cell stack does not have overvoltage trouble, which may lead to excessive corrosion rates and hence shorter service life.

The invention also relates to apparatus for carrying out the process according to the invention, which apparatus comprises
a) means for catalytically converting fuel on the basis of hydrocarbon into an H₂-containing gas, means for cooling said gas, and removing condensed products from it,
b) a "pressure-swing" adsorption unit, means for supplying said cooled gas to said "pressure-swing" adsorption unit, means for supplying a purified H₂ gas formed therein to a fuel cell stack, and
c) a fuel cell stack comprising a plurality of fuel cells based upon phosphoric acid, each comprising an anode compartment and a cathode compartment, the anode compartments including means for supplying and discharging H₂ containing gas, and the cathode compartments being provided with means for supplying and discharging 0₂ containing gas.

The invention will now be described with reference to the accompanying drawings, in wich two flow sheets are given illustrating the process according to the invention. The description of the drawings and the subsequent example should not be construed as limiting the invention in any way, but are given by way of illustration only.

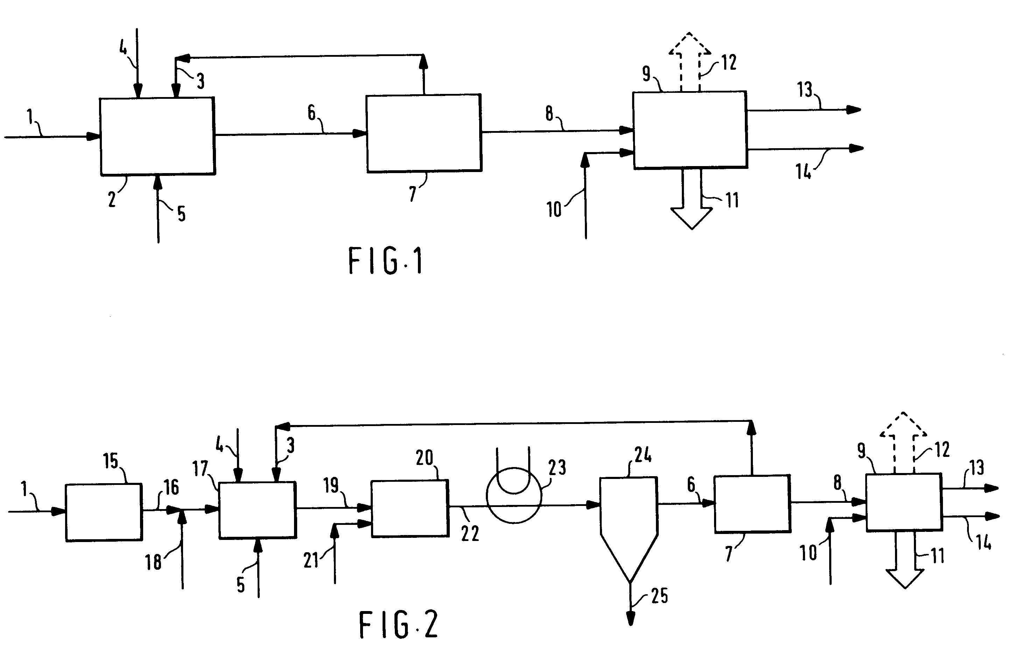

Figure 1 shows a general flow sheet illustrating a preferred embodiment of the process according to the invention, in which a hydrocarbon fuel is supplied through line 1 to an H₂ production unit 2. Through line 3, fuel gas from a subsequent process stage is supplied to unit 2. If desired, additional fuel for heating purposes can be supplied through line 4. This may be the same fuel as that supplied through line 1. Through line 5, an O₂ containing gas for the combustion of the fuel gas and supplementary fuel, if used, are supplied.

The H₂ containing gas produced in unit 2 is passed, after cooling, separation of condensed compounds, and possibly compression, through line 6 to the pressure-swing adsorption unit 7. In unit 7, a gas stream is obtained consisting of highly pure H₂ and a desorption gas, which is returned as a fuel gas through line 3 to unit 2. This unit may comprise a buffer vessel for pure H₂.

The high-purity H₂ gas is supplied through line 8 to the anode compartments of a fuel cell stack 9. Through line 10, an O₂ containing gas is supplied to the cathode compartments of fuel cell stack 9. As a result of the electrochemical conversion of H₂ and O₂ into water, electricity is generated which is removed through 11, and heat, which is removed through 12, and possibly used in the plant.

The H₂ containing gas that is not used is discharged from stack 9 through line 13 and can be returned to the process. This can be effected, for example, by combination with the process streams 1 or 6, or as a fuel gas in combination with stream 3.

The O₂ containing gas from the cathode compartment of stack 9 can be discharged, or supplied to unit 2 through line 5.

Figure 2 shows a flow sheet of a preferred embodiment of the process according to the invention. This preferred embodiment concerns especially a further elaboration of the H₂ production unit 2 of Figure 1. In the following description we will only enter into the aspects and references not already discussed in relation to Figure 1.

The fuel based on hydrocarbon is supplied through line 1 to desulfurizer 15, whereafter the desulfurized fuel is supplied through line 16 to steam reformer 17. Through lines 3 and 4, fuel is supplied to produce the desired temperature. Through lines 5 and 18, O₂ and steam are supplied, respectively. Through line 19 the resulting CO and H₂ containing gas is supplied to water-shift reactor 20, in which the greater part of the CO is converted into CO₂ and H₂. If desired, additional steam can be supplied through line 21. The resulting gas is subsequently supplied through line 22, heat exchanger 23, knock-out drum 24, and line 6 to PSA unit 7. The condensate separated in knock-out drum 24 is discharged through line 25.

### Example

To a plant based on the scheme of Figure 2 and provided with a fuel cell on the basis of phosphoric acid, 100 kmoles/h of natural gas was supplied, with an energy content of 48,972 kJ/kg (Lower heating value). A steam/carbon ratio of 3.5 was used in the feed to the reformer, while the temperature in the reformer was 780°C and the pressure 2.85 bar (absolute). The methane slip was 0.53% (dry).

After the shift reaction, cooling, removal of the condensed components, and compression, 388 kmoles/h of hydrogen was supplied to the pressure-swing unit. 310.4 kmoles/h hydrogen was obtained with a purity of 99.9% and passed to the anode compartments of the fuel cells, which had an operating temperature of 190°C. The direct electricity production is 11.5 MW, while 7.8 MW low-pressure steam is generated, which is used elsewhere in the plant.

The gas leaving the anode compartments contains about 5% of the H₂ supplied, so that about 95% has been reacted with O₂. This gas is supplied together with the natural gas to the steam reformer.

The reformer consumed 7.8 MW in energy, which was largely provided by the desorption gas of the pressure-swing adsorption unit. As little as 470 kW of power was provided by supplementary fuel (natural gas). The energy taken up by the reformer was 6.1 MW, i.e., an efficiency of 78%.

The overall power supply to the plant was 22.83 MW. Taking into account the energy requirement of the plant, such as gas compression and pumps, of about 2 MW, the efficiency of the plant was 41.1%, calculated as the ratio of the amount of A.C. electricity produced to the "Lower heating value" of the feed and fuel supplied (x 100%). The efficiency of the apparatus for converting direct current into alternating current was 99%.

## Claims

1. A process for converting a fuel on the basis of hydrocarbon into electricity, by comprising the following stages:
a) catalytically converting said fuel into an H₂ containing gas,
b) passing said H₂ containing gas through at least one "pressure-swing" adsorption unit to produce an H₂ gas stream of high purity, as well as a desorption gas, and
c) supplying said H₂ gas stream of high purity to the anode compartments of at least one fuel cell stack operating at a temperature of at least 140°C, said fuel cell stack consisting of fuel cells based upon phosphoric acid, in which electricity is generated.

2. A process as claimed in claim 1, in which said fuel is based on natural gas, LPG, naphtha, petrol, biogas, gas from household refuse, diesel oil, fuel oil, lower alcohols, such as methanol, and/or gas from the gasification of coal, wood and/or refuse, and preferably natural gas.

3. A process as claimed in claim 1 or 2, in which an H₂ and CO containing gas is converted in a shift reactor into said H₂ containing gas.

4. A process as claimed in claims 1-3, wherein said fuel is converted in a steam reformer into a gas containing H₂ and CO.

5. A process as claimed in claims 1-4, wherein said H₂ containing gas stream from stage a) is cooled to a temperature ranging between 0 and 100°C, and the condensed liquid is separated from the gas.

6. A process as claimed in claims 1-5, wherein the H₂ containing gas stream is supplied to said "pressure-swing" adsorption unit, in which, at a high pressure level, in at least one adsorption unit, substantially all impurities and a portion of the H₂ are adsorbed to form an H₂ gas stream of high purity, while the adsorbed components are desorbed at a lower pressure level to form said desorption gas.

7. A process as claimed in claims 1-6, wherein said desorption gas is used as a fuel gas in the catalytic conversion of the fuel.

8. A process as claimed in claim 6, wherein the adsorption conditions are so selected that the H₂ gas stream of high purity has an H₂ content of at least 98% by volume, preferably at least 99.9% by volume, and more particularly at least 99.99% by volume.

9. A process as claimed in claims 1-8, wherein the adsorption is carried out by means of an adsorption unit based on aluminium oxide, silica, activated carbon, zeolite, and/or substances of comparable activity.

10. A process as claimed in claims 1-9, wherein the H₂ gas stream of high purity is passed, at least in part, to the fuel cell unit through a buffer vessel.

11. A process as claimed in claim 10, wherein the gas from the anode compartments of the fuel cells is returned to the inlet of stage a) or stage b).

12. A process as claimed in claims 1-11, wherein the gas from the cathode compartments of the fuel cells is used in the conversion of the fuel into an H₂-containing gas.

13. A process as claimed in claims 1-12, wherein the heat produced in the fuel cell stack is removed and used in stage a).

14. A process as claimed in claims 1-13, wherein the heat produced is converted into steam, which, if desired after overheating, is used in the H₂ production unit.

15. A process as claimed in claims 1-14, wherein an electricity conditioner is coupled to the fuel cell for converting the direct current produced into alternating current.

16. Apparatus for carrying out the process as claimed in any of claims 1-15, comprising
a) means for catalytically converting fuel on the basis of hydrocarbon into an H₂ containing gas, means for cooling said gas, and removing condensed products from it,
b) a "pressure-swing" adsorption unit, means for supplying said cooled gas to said "pressure-swing" adsorption unit, means for supplying a purified H₂ gas formed therein to a fuel cell stack, and
c) a fuel cell stack comprising a plurality of fuel cells based upon phosphoric acid, each comprising an anode compartment and a cathode compartment, the anode compartments including means for supplying and discharging H₂ containing gas, and the cathode compartments being provided with means for supplying and discharging 0₂ containing gas.

## Patentansprüche

1. Verfahren zur Umwandlung von Brennstoff auf der Basis von Kohlenwasserstoffen in Elektrizität durch Anwendung der folgenden Schritte:
a) katalytische Umwandlung des Brennstoffs in ein H₂ enthaltendes Gas,
b) Durchleitung des H₂ enthaltenden Gases durch wenigstens eine "Druck-Wechsel"-Adsorptionseinheit, um einen H₂-Gasstrom hoher Reinheit und ein Desorptionsgas zu erzeugen, und
c) Zuführung des H₂-Gasstroms hoher Reinheit zum Anodenraum von wenigstens einer Brennstoffzelleneinrichtung, die bei einer Temperatur von mindestens 140 °C arbeitet, wobei die Brennstoffzelleneinrichtung aus Brennstoffzellen auf der Basis von Phosphorsäure besteht, in welchen die Elektrizität erzeugt wird.

2. Verfahren nach Anspruch 1,
in welchem der Brennstoff basiert auf Naturgas, LPG, Naphtha, Petroleum, Biogas, Gas aus Hausmüll, Dieselöl, Heizöl, niederen Alkoholen, wie etwa Methanol, und/oder Gas aus der Vergasung von Kohle, Holz und/oder Müll und vorzugsweise Naturgas.

3. Verfahren nach Anspruch 1 oder 2,
in welchem ein H₂ und C0 enthaltendes Gas in einem shift-Reaktor in das H₂ enthaltende Gas umgewandelt wird.

4. Verfahren nach den Ansprüchen 1 bis 3,
wobei der Brennstoff in einem Dampfreformer in ein H₂ und C0 enthaltendes Gas umgewandelt wird.

5. Verfahren nach den Ansprüchen 1 bis 4,
wobei der H₂ enthaltende Gasstrom aus Schritt a) gekühlt wird auf eine Temperatur im Bereich zwischen 0 und 100 °C und die kondensierte Flüssigkeit von dem Gas abgetrennt wird.

6. Verfahren nach den Ansprüchen 1 bis 5,
wobei der H₂ enthaltende Gasstrom zu der "Druck-Wechsel"-Adsorptionseinheit geführt wird, in der bei einem hohen Druckniveau in wenigstens einer Adsorptionseinheit im wesentlichen alle Verunreinigungen und ein Teil des H₂ adsobiert werden, um einen H₂-Gasstrom hoher Reinheit zu erzeugen, während die adsorbierten Komponenten bei einem niedrigeren Druckniveau desorbiert werden, um das Desorptionsgas zu bilden.

7. Verfahren nach den Ansprüchen 1 bis 6,
wobei das Desorptionsgas benutzt wird als Brenngas für die katalytische Umwandlung des Brennstoffs.

8. Verfahren nach Anspruch 6,
wobei die Adsorptionsbedingungen so ausgewählt werden, daß der H₂-Gasstrom hoher Reinheit einen H₂-Gehalt von wenigstens 98 Vol.-%, vorzugsweise wenigstens 99,9 Vol.-%, und besonders bevorzugt von wenigstens 99,99 Vol.-% hat.

9. Verfahren nach den Ansprüchen 1 bis 8,
wobei die Adsorption ausgeführt wird mittels einer Adsorptionseinheit auf der Basis Aluminiumoxid, Kieselerde, Aktivkohle, Zeolith und/oder Substanzen vergleichbarer Aktivität.

10. Verfahren nach den Ansprücuen 1 bis 9,
wobei der H₂-Gasstrom hoher Reinheit wenigstens teilweise über einen Speicherbehälter der Brennstoffzelleneinheit zugeführt wird.

11. Verfahren nach Anspruch 10,
wobei das Gas von den Anodenräumen der Brennstoffzellen zurückgeführt wird zum Eingang von Schritt a) oder Schritt b).

12. Verfahren nach den Ansprüchen 1 bis 11,
wobei das Gas von den Katodenräumen der Brennstoffzellen benutzt wird zur Umwandlung des Brennstoffs in ein H₂ enthaltendes Gas.

13. Verfahren nach den Ansprüchen 1 bis 11,
wobei die Wärme, die in den Brennstoffzellen erzeugt wird, abgeführt und in Schritt a) benutzt wird.

14. Verfahren nach den Ansprüchen 1 bis 13,
wobei die erzeugte Wärme in Dampf umgewandelt wird, welcher, falls gewünscht nach einer Überhitzung, in der H₂-Erzeugungseinheit genutzt wird.

15. Verfahren nach den Ansprüchen 1 bis 14,
wobei ein Elektrizitätskonditionierer an die Brennstoffzelle gekoppelt ist zur Umwandlung des erzeugten Gleichstroms in Wechselstrom.

16. Vorrichtung zur Durchführung des Verfahrens nach einem der Ansprüche 1 bis 15, enthaltend
a) Mittel zur katalytischen Umwandlung von Brennstoff auf der Basis von Kohlenwasserstoff in ein H₂ enthaltendes Gas, Mittel zur Kühlung dieses Gases und zur Entfernung von kondensierten Produkten daraus,
b) eine "Druck-Wechsel"-Adsorptionseinheit, Mittel zur Zuführung des gekühlten Gases zur "Druck-Wechsel"-Adsorptionseinheit, Mittel zur Zuführung eines gereinigten H₂-Gases, das darin erzeugt wurde, zu einer Brennstoffzelleneinheit, und
c) eine Brennstoffzelleneinheit umfassend eine Vielzahl von Brennstoffzellen basierend auf Phosphorsäure, wobei jede einen Anodenraum und einen Katodenraum umfaßt, die Anodenräume Mittel beinhalten zur Zuführung und Abführung von H₂ enthaltendem Gas und die Katodenräume mit Mitteln zur Zuführung und Ableitung eines 0₂ enthaltenden Gases versehen sind.

## Revendications

1. Un procédé pour la conversion d'un combustible à base de carbone en électricité, comportant les étapes suivantes:
a) la conversion catalytique du combustible en question en un gaz contenant de l'hydrogène,
b) le passage dudit gaz contenant de l'hydrogène au travers d'au moins une unité d'adsorption à pression alternée, afin de produire un flux d'hydrogène gazeux de haute pureté, ainsi qu'un gaz de désorption,
c) l'envoi dudit flux de gaz hydrogène de haute pureté au compartiment anodique d'au moins une pile de cellules à combustible, fonctionnant à une température d'au moins 140 C, la pile de cellules à combustible en question étant composée de cellules à base d'acide phosphorique, dans lesquelles de l'électricité est produite.

2. Un procédé, tel que revendiqué dans la revendication 1, dans lequel le combustible est du gaz naturel, du gaz de pétrole liquéfié, du naphte, du pétrole, du gaz biologique, du gaz d'ordure domestique, de l'essence diesel, du fuel, des alcools légers tels que du méthanol, ou du gaz provenant de la gazéification du charbon, du bois ou de déchets, et de préférence du gaz naturel.

3. Un procédé, tel que revendiqué dans les revendications 1 ou 2, dans lequel un gaz contenant de l'hydrogène et du monoxyde de carbone est converti dans un réacteur de mutation en gaz d'hydrogène tel que décrit.

4. Un procédé, tel que revendiqué sous les revendications 1 à 3, dans lequel ledit combustible est transformé, dans un réacteur à vapeur en un gaz contenant de l'hydrogène et du monoxyde de carbone.

5. Un procédé, tel que revendiqué sous les revendications 1 à 4, dans lequel ledit flux gazeux contenant de l'hydrogène, en provenance de l'étape a), est refroidi à une température comprise entre 0 et 100 C, et le liquide condensé est séparé du gaz.

6. Un procédé, tel que revendiqué sous les revendications 1 à 5, dans lequel le flux gazeux contenant de l'hydrogène est fourni à ladite unité d'adsorption à pression alternée, dans laquelle, à haute pression, et dans au moins une unité d'adsorption, pratiquement toutes les impuretés et une partie de l'hydrogène sont adsorbés pour fournir un flux d'hydrogène de haute pureté, cependant que les produits adsorbés sont désorbés à plus basse pression pour former ledit gaz de désorption.

7. Un procédé, tel que revendiqué sous les revendications 1 à 6, dans lequel ledit gaz de désorption est employé comme combustible pour la conversion catalytique du combustible.

8. Un procédé, tel que revendiqué sous la revendication 6, dans lequel les conditions d'adsorption sont choisies de façon que le flux de gaz hydrogène de haute pureté ait une teneur en hydrogène d'au moins 99 % en volume, et de préférence 99,9 % en volume, et plus particulièrement au moins 99,99 % en volume.

9. Un procédé, tel que revendiqué par les revendications de 1 à 8, dans lequel l'adsorption est réalisée dans une unité d'adsorption basée sur l'oxyde d'aluminium, la silice, le charbon actif, la zéolite, ou des substances d'activité comparable.

10. Un procédé, tel que revendiqué par les revendications de 1 à 9, dans lequel le flux de gaz hydrogène de haute pureté est envoyé, au moins partiellement, à l'unité de cellules à combustible par l'intermédiaire d'un réservoir tampon.

11. Un procédé, tel que revendiqué sous la revendication 10, dans lequel le gaz en provenance des compartiments anodiques des cellules à combustible est renvoyé à l'entrée des étapes a) ou b).

12. Un procédé, tel que revendiqué sous les revendications 1 à 11, dans lequel le gaz en provenance des compartiments cathodiques des cellules à combustible est utilisé à la conversion du combustible en un gaz contenant de l'hydrogène.

13. Un procédé, tel que revendiqué sous les revendications 1 à 12, dans lequel la chaleur produite dans la pile de cellules à combustible est récupérée et utilisée dans l'étape a).

14. Un procédé, tel que revendiqué sous les revendications 1 à 13, dans lequel la chaleur produite est transformée en vapeur, laquelle, éventuellement après surchauffe, est employée dans l'unité de production d'hydrogène.

15. Un procédé, tel que revendiqué sous les revendications 1 à 14, dans lequel un convertisseur électrique est accouplé à la cellule à combustible, pour convertir le courant continu produit en courant alternatif.

16. Un appareil pour la mise en oeuvre du procédé, tel que revendiqué sous les revendications 1 à 15, comprenant
a) des moyens pour la conversion catalyque du combustible à base d'hydrocarbone en un gaz contenant de l'hydrogène, des moyens pour refroidir ledit gaz, et séparer les produits condensés de celui-ci,
b) une unité d'adsorption à pression alternée, des moyens pour fournir ledit gaz refroidi à ladite unité d'adsorption à pression alternée, des moyens pour fournir un hydrogène gazeux purifié formé là-dedans à une pile de cellules à combustible, et
c) une pile de cellules à combustible comprenant une pluralité de cellules à combustible à base d'acide phosphorique, chacune comprenant un compartiment anodique et un compartiment cathodique, les compartiments anodiques contenant des moyens pour fournir et décharger du gaz contenant de l'hydrogène, et les compartiments cathodiques étant munis de moyens pour fournir et décharger du gaz contenant de l'oxygène.
